(19) Europäisches Patentamt
European Patent Office
Office européen des brevets

(11) **EP 4 455 794 A1**

(12) **EUROPEAN PATENT APPLICATION**
published in accordance with Art. 153(4) EPC

(43) Date of publication:
**30.10.2024 Bulletin 2024/44**

(21) Application number: **23745893.0**

(22) Date of filing: **09.01.2023**

(51) International Patent Classification (IPC):
**G03G 15/04** (2006.01)    **G02B 26/10** (2006.01)

(52) Cooperative Patent Classification (CPC):
**G02B 26/10; G02B 26/12; G03G 15/04**

(86) International application number:
**PCT/CN2023/071342**

(87) International publication number:
**WO 2023/143010 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.01.2022 CN 202210095730**

(71) Applicant: **Huawei Technologies Co., Ltd.**
**Shenzhen, Guangdong 518129 (CN)**

(72) Inventors:
• **ZHANG, Kaiyuan**
**Shenzhen, Guangdong 518129 (CN)**
• **HE, Baoding**
**Shenzhen, Guangdong 518129 (CN)**
• **LI, Rui**
**Shenzhen, Guangdong 518129 (CN)**
• **KUO, Li-Te**
**Shenzhen, Guangdong 518129 (CN)**
• **GAO, Yidong**
**Shenzhen, Guangdong 518129 (CN)**

(74) Representative: **Maiwald GmbH**
**Engineering**
**Elisenhof**
**Elisenstrasse 3**
**80335 München (DE)**

(54) **LASER SCANNING UNIT AND LASER PRINTER**

(57) A laser scanning unit (20) and a laser printer are provided, and relate to the field of laser scanning technologies. The laser scanning unit (20) includes a laser source (1), a beam combiner (2), and a scanning component. The laser source (1) is configured to generate a plurality of laser beams. The beam combiner (2) has light input ends (22) and light output ends (23) that are in one-to-one correspondence with the laser beams. The light input end (22) is configured to receive a corresponding laser beam. The beam combiner (2) is configured to output, after reducing a spacing between central rays of the laser beams received by the light input ends (22), each laser beam from a corresponding light output end (23). Light emitting centers of the light output ends (23) are arranged along a straight line, and spacings between light emitting centers of adjacent light output ends (23) are equal. The scanning component is configured to scan, on a photosensitive surface along a primary scanning direction, each laser beam that is output by the beam combiner (2), to form a plurality of rows of scanning light spots. In this way, a laser scanning speed can be improved, so that a printing speed of the laser printer can be improved.

FIG. 5

## Description

This application claims priority to Chinese Patent Application No. 202210095730.9, filed with the China National Intellectual Property Administration on January 26, 2022 and entitled "LASER SCANNING UNIT AND LASER PRINTER", which is incorporated herein by reference in its entirety.

## TECHNICAL FIELD

This application relates to the field of laser scanning technologies, and in particular, to a laser scanning unit and a laser printer.

## BACKGROUND

A printer is a common device in people's daily work and study, and provides important support for efficient work and study. A laser printer has a high printing speed and low material consumption and does not have nozzle blockage caused by long-time placement of an inkjet printer, and therefore has gained increasing attention in recent years.

A printing process of the laser printer is generally as follows: First, based on a to-be-printed image, a laser signal is controlled to be scanned on a photosensitive drum, so that a special charge distribution is formed on the photosensitive drum. Then, toner in a toner cartridge is added to a surface of the photosensitive drum, so that toner with opposite charges is absorbed on the surface of the photosensitive drum. Next, the toner on the surface of the photosensitive drum is transferred to paper. Finally, the toner is melted and fixed on the paper to complete printing.

Currently, laser printers are developing toward color printing to satisfy diversified printing requirements of users. A color laser printer implements printing of various colors by mixing toner of a plurality of colors, and an operating principle of the color laser printer is similar to that of a black-and-white laser printer. A main difference is that the black-and-white laser printer uses black toner to implement black-and-white printing, while the color laser printer needs to use toner of a plurality of colors in sequence to perform printing of a plurality of colors. Therefore, a printing speed of the color laser printer is lower.

## SUMMARY

In view of this, this application provides a laser scanning unit and a laser printer, to improve a laser scanning speed and improve a printing speed of the laser printer.

To achieve the foregoing objective, according to a first aspect, an embodiment of this application provides a laser scanning unit, including:

> a laser source, configured to generate a plurality of laser beams;
> a beam combiner, having light input ends and light output ends that are in one-to-one correspondence with the laser beams, where the light input end is configured to receive a corresponding laser beam, the beam combiner is configured to output, after reducing a spacing between central rays of the laser beams received by the light input ends, each laser beam from a corresponding light output end, light emitting centers of the light output ends are arranged along a straight line, and spacings between light emitting centers of adjacent light output ends are equal; and
> a scanning component, configured to scan, on a photosensitive surface along a primary scanning direction, each laser beam that is output by the beam combiner, to form a plurality of rows of scanning light spots.

The laser scanning unit (laser scanning unit, LSU) provided in this embodiment of this application may generate a plurality of laser beams, to implement simultaneous multi-row scanning on a photosensitive surface. Therefore, a scanning speed can be effectively improved. In addition, when the LSU is used in a laser printer, a printing speed of the laser printer can be improved. In addition, in the solution of this application, the LSU uses a beam combiner, so that a plurality of laser sources can be accurately arranged at a small spacing, to ensure that the plurality of laser beams are accurately focused on the photosensitive surface, and implement high-precision scanning.

In addition, for a color laser printer using toner of a plurality of (for example, four) colors, when one LSU that uses four or more laser beams is used to sequentially print various colors, a printing speed can be the same as or even higher than a printing speed of a color laser printer that uses four conventional LSUs (which generate one laser beam). In this way, there is no need to use four LSUs. Therefore, in the technical solution provided in this embodiment of this application, a printing speed of a color laser printer is improved, and structure complexity and manufacturing costs of the color laser printer can be reduced.

In a possible implementation of the first aspect, the light input end and the light output end that are corresponding to each laser beam are connected by using an optical waveguide channel. In this way, structure complexity of the beam combiner can be reduced, and light transmission efficiency can be improved.

In a possible implementation of the first aspect, the scanning component includes: a collimation system, a multi-sided scanning mirror, and an imaging optical system. The collimation system is configured to collimate the laser beams whose spacing is reduced by the beam combiner, the multi-sided scanning mirror is configured to deflect and scan the laser beams that are collimated by the collimation system, and the imaging optical system is configured to focus, on the photosensitive surface, the laser beams that are deflected and scanned by the multi-sided scanning mirror, to form the plurality of rows of scanning light spots that are arranged along the primary scanning direction.

In a possible implementation of the first aspect, the laser scanning unit satisfies: $f1=d1/\tan(\theta1)$, where f1 indicates a focal length of the collimation system, d1 indicates the spacing between light emitting centers of adjacent light output ends, and $\theta1$ indicates an included angle between central rays after laser beams that are output by adjacent light output ends pass through a collimation lens.

In the foregoing implementation, the selected collimation system can better satisfy a requirement for an optical path, to better ensure scanning precision of the system.

In a possible implementation of the first aspect, the laser scanning unit satisfies: $25.4/dpi=f2*(\theta1*\pi/180°)$, where dpi indicates a scanning resolution of the photosensitive surface in a secondary scanning direction, and f2 indicates a focal length of the imaging optical system.

An optical path parameter is designed in the foregoing implementation, to better ensure scanning precision of the system in the secondary scanning direction.

In a possible implementation of the first aspect, the laser scanning unit satisfies: $f2=d2/(\theta2*\pi/180°)$, where f2 indicates the focal length of the imaging optical system, d2 indicates a scanning width of the photosensitive surface in the primary scanning direction, and $\theta2$ indicates a scanning angle of the multi-sided scanning mirror.

An optical path parameter is designed in the foregoing implementation, to better ensure scanning precision of the system in the primary scanning direction.

In a possible implementation of the first aspect, the multi-sided scanning mirror includes a rotating shaft, the multi-sided scanning mirror rotates around the rotating shaft that is used as an axis, and the light emitting centers of the light output ends are arranged at equal spacings along a direction parallel to the rotating shaft of the multi-sided scanning mirror.

In the foregoing implementation, the light emitting centers of the light output ends are arranged at equal spacings along the direction parallel to the rotating shaft of the multi-sided scanning mirror. Correspondingly, light spots formed by the laser beams on the photosensitive surface may be arranged at equal spacings along the secondary scanning direction, that is, the light spots formed by the laser beams on the photosensitive surface are aligned in a column direction. In this way, it is convenient to modulate laser, and complexity of a laser modulation process is reduced.

In a possible implementation of the first aspect, the spacing d1 between light emitting centers of adjacent light output ends satisfies: $50\ \mu m>d1>10\ \mu m$. In this way, a volume of the collimation system can be reduced, manufacturing difficulty can be reduced, and light transmission effect can be improved.

In a possible implementation of the first aspect, the laser scanning unit satisfies: $1>L1/f1>0.2$, where f1 indicates the focal length of the collimation system, and L1 indicates an optical path length of the collimation system.

In the foregoing implementation, structure complexity of the collimation system can be reduced, and a requirement for the volume of the collimation system can be satisfied.

In a possible implementation of the first aspect, the laser scanning unit satisfies: $1.5>f2/L2>0.5$, where f2 indicates the focal length of the imaging optical system, and L2 indicates an optical path length of the imaging optical system.

In a possible implementation of the first aspect, emitting directions of the light emitting centers of the light output ends face an optical center of the collimation system. In this way, it is convenient for the collimation system to collect the laser beams, and light transmission efficiency is improved.

In a possible implementation of the first aspect, a coupling lens is disposed at the light input end of the beam combiner. In this way, light coupling efficiency of the beam combiner can be increased, and light transmission efficiency can be improved.

According to a second aspect, an embodiment of this application provides a laser printer, including a control unit, a photosensitive drum, and the laser scanning unit according to the first aspect or any implementation of the first aspect. The control unit is configured to:

control the laser scanning unit to scan a plurality of generated laser beams on a photosensitive surface of the photosensitive drum along a primary scanning direction, to form a plurality of rows of scanning light spots, where the primary scanning direction is parallel to an axial direction of a rotating shaft of the photosensitive drum; and each time the laser scanning unit completes one time of scanning along the primary scanning direction, control the photosensitive drum to rotate around the rotating shaft, so that a scanning light spot on the photosensitive surface moves a distance of a plurality of dots.

It may be understood that, for beneficial effects of the second aspect, refer to the related descriptions in the first aspect. Details are not described herein again.

**BRIEF DESCRIPTION OF DRAWINGS**

FIG. 1 is a diagram of a structure of a black-and-white laser printer according to an embodiment of this application;
FIG. 2 is a diagram of a structure of a color laser printer according to an embodiment of this application;
FIG. 3 is a diagram of a structure of another color laser printer according to an embodiment of this application;
FIG. 4 is a diagram of a laser scanning process according to an embodiment of this application;
FIG. 5 is a diagram of a structure of an LSU according to an embodiment of this application;
FIG. 6 is a diagram of a structure of a beam combiner according to an embodiment of this application;
FIG. 7 is a diagram of a position relationship between light output ends of optical waveguide channels in FIG. 6;
FIG. 8 is a diagram of an optical path in a secondary scanning cross-section according to an embodiment of this application;
FIG. 9 is a diagram of a structure of another LSU according to an embodiment of this application; and
FIG. 10 is a diagram of a structure of still another LSU according to an embodiment of this application.

**DESCRIPTION OF EMBODIMENTS**

The following describes embodiments of this application with reference to accompanying drawings in embodiments of this application. Terms used in implementations of embodiments of this application are merely used to explain specific embodiments of this application, and are not intended to limit this application. The following specific embodiments may be combined with each other, and same or similar concepts or processes may not be described repeatedly in some embodiments.

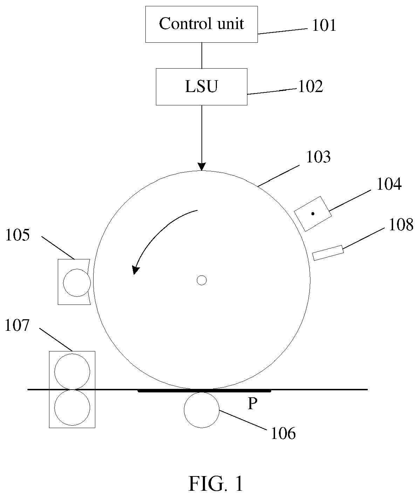

For ease of understanding of technical solutions in embodiments of this application, the following first describes a structure and an operating principle of a black-and-white laser printer. FIG. 1 is a diagram of a structure of a black-and-white laser printer according to an embodiment of this application. As shown in FIG. 1, the black-and-white laser printer may include a control unit 101, an LSU 102, a photosensitive drum 103, a charging unit 104, a developing unit 105, a transfer unit 106, a fixing unit 107, and a cleaning unit 108. The LSU 102 may include a laser device and a scanning component (not shown).

It may be understood that the structure shown in this embodiment of this application does not constitute a specific limitation on the laser printer. In some other embodiments of this application, the laser printer may include more or fewer components than those shown in the figure, or combine some components, or split some components, or have different component arrangements. The components shown in the figure may be implemented in hardware, software, or a combination of software and hardware.

The control unit 101 may be a nerve center and a command center of the laser printer, and may generate a control signal to control other unit modules, so that the unit modules operate in coordination. That is, the control unit 101 is electrically connected to another unit module that needs to be controlled by using an electrical signal. For brevity, the figure merely shows an example of a connection relationship between the control unit 101 and the LSU 102, and is not intended to limit this application.

An image printed by the laser printer is written on the photosensitive drum 103 line by line by using laser, and is transferred to paper (transfer material) after being developed.

Specifically, the LSU 102 may include the laser device and the scanning component (not shown). The control unit 101 may modulate, based on a to-be-printed image, a laser beam generated by the laser device in the LSU 102, to control a light amount and a switch state of the laser beam generated by the laser device. The scanning component in the LSU 102 may scan, on a photosensitive surface of the photosensitive drum 103 along a primary scanning direction, the laser beam generated by the laser device, to form a row of scanning light spots. The primary scanning direction is parallel to a rotating shaft (namely, a central shaft of the photosensitive drum 103) of the photosensitive drum 103.

The scanning component may include a collimation lens, a multi-sided scanning mirror, and an fθ lens. The collimation lens may collimate the laser beam generated by the laser device, so that the laser beam becomes a basically parallel beam after passing through the collimation lens. The multi-sided scanning mirror may deflect and scan the laser beam passing through the collimation lens. The fθ lens may focus the laser beam passing through the multi-sided scanning mirror on the photosensitive surface of the photosensitive drum 103, to form the scanning light spots.

The multi-sided scanning mirror may be a prismatic four-sided or six-sided mirror, or the like. When the laser beam passing through the collimation lens reaches a reflective surface (namely, any mirror surface of the multi-sided scanning mirror) of the multi-sided scanning mirror, the laser beam may be deflected to the fθ lens under reflection effect of the reflective surface. In addition, the multi-sided scanning mirror may rotate around a central shaft (namely a rotating shaft) of the multi-sided scanning mirror when driven by a driving apparatus such as a motor. Under reflection and rotation effect of the multi-sided scanning mirror, the laser beam focused by the fθ lens may move from one end of the photosensitive drum 103 to the other end along the primary scanning direction, to form the scanning light spots. The six-sided mirror is used as an example. Six side surfaces of the multi-sided scanning mirror may form six reflective surfaces. Each time the multi-sided scanning mirror completes one rotation, six times of scanning may be completed, to form six rows of scanning light spots.

The photosensitive drum 103 may rotate, driven by a motor (not shown), along a counterclockwise direction shown in the figure. Each time the LSU 102 completes one time of scanning along the primary scanning direction (that is, completes scanning of one row), the photosensitive surface of the photosensitive drum 103 rotates by a distance of one dot correspondingly, that is, the scanning light spot on the photosensitive surface moves a distance of one dot along the photosensitive surface. As the photosensitive drum 103 rotates, the photosensitive surface of the photosensitive drum 103 moves along a secondary scanning direction relative to the laser beam, to implement scanning along the secondary scanning direction. The secondary scanning direction is perpendicular to the primary scanning direction, and is consistent with a rotating direction of the photosensitive drum 103. In other words, the primary scanning direction is parallel to an axial direction of the photosensitive drum 103 (which may also be considered as a row direction of the paper), and the secondary scanning direction is the rotating direction of the photosensitive drum 103 (which may also be considered as a column direction of the paper).

The charging unit 104 may charge the photosensitive drum 103, so that the photosensitive surface of the photosensitive drum 103 generates uniform negative charges. A point that is on the photosensitive surface of the photosensitive drum 103 and that is illuminated by (that is, exposed to) the laser beam is discharged, and a charge of an unexposed point remains unchanged. As the LSU 102 performs scanning and the photosensitive drum 103 rotates, the photosensitive surface of the photosensitive drum 103 may form a latent image under effect of the laser beam, namely, an electrostatic latent image.

The developing unit 105 is located downstream of an exposed position of the photosensitive drum 103. As the photosensitive drum 103 rotates, the electrostatic latent image may be transferred to a developing position of the developing unit 105. The developing unit 105 has a black (black, Bk) developing agent (generally toner, which is used as an example for description below), and the toner has negative charges. In a process in which the electrostatic latent image passes through the developing position, the developing unit 105 may add the Bk toner to the photosensitive surface of the photosensitive drum 103. An exposed point in the electrostatic latent image may absorb the toner, and an unexposed point excludes the toner. Therefore, under effect of the Bk toner, the electrostatic latent image is developed into a visible black image.

When passing through the transfer unit 106, the black image developed by the developing unit 105 may be transferred by the transfer unit 106 to paper P located between the photosensitive drum 103 and the transfer unit 106. The paper P may be supplied by a paper box (not shown) on a side of the photosensitive drum 103, or may be manually supplied.

The fixing unit 107 may include a heat roller system. After the black image is transferred to the paper P, the paper P may be sent to the fixing unit 107, and the heat roller system of the fixing unit 107 pressurizes and heats the paper P, so that the black image is fixed on the paper P. The fixed paper P may be output to the outside of the apparatus.

The cleaning unit 108 is configured to remove toner and charges remaining on the photosensitive surface of the photosensitive drum 103, so that there is a clean photosensitive drum 103 in a next printing cycle.

As described above, the black-and-white laser printer generates an electrostatic latent image on the photosensitive drum 103 by using a laser beam, then develops the electrostatic latent image by using black toner, and fixes an obtained black image on paper, to complete black-and-white printing. A color laser printer is similar to the black-and-white laser printer. A main difference is that the color laser printer needs to use toner of a plurality of colors in sequence to perform printing of a plurality of colors. Therefore, a printing speed of the color laser printer is lower.

The color laser printer generally uses a CMYK mode for printing, that is, color printing is implemented by using toner of four colors: cyan (cyan, C), magenta (magenta, M), yellow (yellow, Y), and black (black, Bk). It may be understood that the color laser printer may alternatively implement color printing by using another color mode. In this embodiment, the CMYK mode is used as an example for description subsequently.

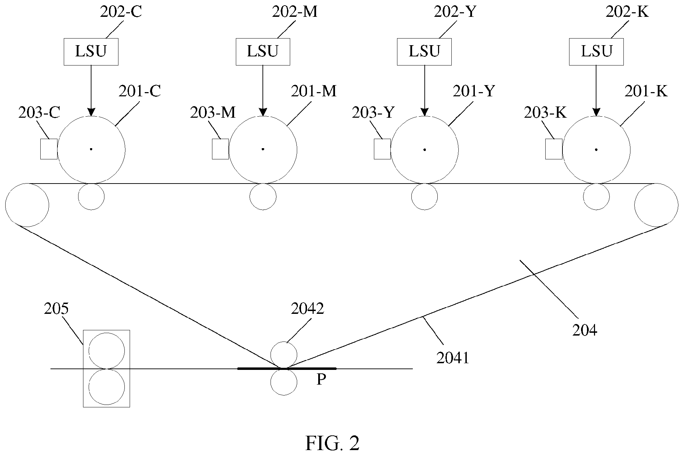

To improve a printing speed, in a conventional technology, an optional solution is to use four photosensitive drums to print the four colors simultaneously. Specifically, as shown in FIG. 2, a laser printer includes four photosensitive drums: a photosensitive drum 201-C, a photosensitive drum 201-M, a photosensitive drum 201-Y, and a photosensitive drum 201-K. Each photosensitive drum is provided with an LSU and a developing unit. The photosensitive drum 201-C is corresponding to an LSU 202-C and a developing unit 203-C, the photosensitive drum 201-M is corresponding to an LSU 202-M and a developing unit 203-M, the photosensitive drum 201-Y is corresponding to an LSU 202-Y and a developing unit 203-Y, and the photosensitive drum 201-K is corresponding to an LSU 202-K and a developing unit 203-K.

The laser printer may generate four laser beams by using the LSU 202-C, the LSU 202-M, the LSU 202-Y, and the LSU 202-K. Correspondingly, the four laser beams are scanned on the photosensitive drum 201-C, the photosensitive drum 201-M, the photosensitive drum 201-Y, and the photosensitive drum 201-K respectively, to form electrostatic latent images corresponding to the four colors. The four laser beams may be modulated by using a control unit. For brevity, FIG. 2 does not show some functional modules such as the control unit.

The developing unit 203-C, the developing unit 203-M, the developing unit 203-Y, and the developing unit 203-K each contain toner of one color. The electrostatic latent images corresponding to the four colors each may be developed by a corresponding developing unit into a visible image.

Visible images of the four colors may be transferred by a transfer unit 204 to paper P through secondary transfer. The transfer unit 204 includes a transfer belt 2041 and a transfer roller 2042. As the four photosensitive drums rotate and the transfer belt 2041 of the transfer unit 204 moves, the visible images of the four colors may be successively transferred to a same transfer area on the transfer belt 2041, to form a color image in the transfer area. As the transfer belt 2041 moves, the color image in the transfer area may be transferred to the paper P under an action of the transfer roller 2042.

After the color image is transferred to the paper P, the paper P may be sent to a fixing unit 205, and the fixing unit 205 pressurizes and heats the paper P, so that the color image is fixed on the paper P.

The transfer belt and each photosensitive drum may be provided with a cleaning unit (not shown) to remove toner and charges remaining on the transfer belt and each photosensitive drum.

It can be learned that, in the conventional technology, the laser printer needs four sets of LSUs and photosensitive drums, and the structure is complex, resulting in high manufacturing costs.

To improve a printing speed and reduce structure complexity and manufacturing costs, embodiments of this application provide an LSU. Simultaneous multi-row scanning on a photosensitive surface is implemented mainly by increasing a quantity of laser beams. In addition, a multi-channel beam combiner is used, so that a plurality of laser sources are accurately arranged at a small spacing, to ensure that the plurality of laser beams perform high-precision scanning on the photosensitive surface.

The LSU that can implement multi-row scanning provided in embodiments of this application may be used in a laser printer, to improve a printing speed of the laser printer and reduce structure complexity and manufacturing costs of the laser printer. The LSU may be further used in another device that requires high-precision and large-range scanning, for example, may be used in a lidar scanning device, to improve a scanning speed of the lidar scanning device.

The laser printer in which the LSU is used may be a black-and-white laser printer, or may be a color laser printer.

For example, the LSU may replace the LSU in the black-and-white laser printer shown in FIG. 1, to perform multi-row scanning on the photosensitive drum. A specific printing process is similar to the printing process described in FIG. 1. A main difference is that each time one time of scanning is completed, the photosensitive drum may rotate by a distance of a plurality of dots based on a quantity of rows scanned at one time. For example, if four rows are scanned at one time, the photosensitive drum rotates by a distance of four dots.

For the color laser printer, the LSU, the developing unit, and the transfer unit may be adjusted based on the laser printer shown in FIG. 1, to implement multi-row scanning and color printing. The following uses a color laser printer as an example to describe the technical solutions of this application.

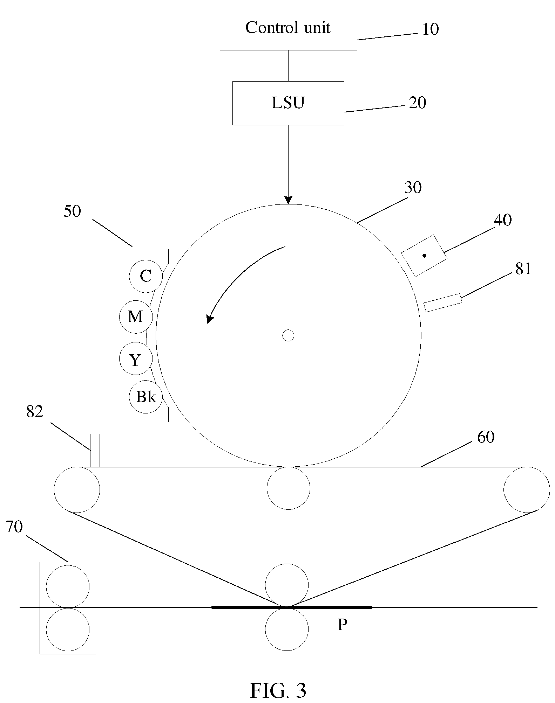

FIG. 3 is a diagram of a structure of another color laser printer according to an embodiment of this application. As shown in FIG. 3, the color laser printer may include a control unit 10, an LSU 20, a photosensitive drum 30, a charging unit 40, a developing unit 50, a transfer unit 60, a fixing unit 70, a cleaning unit 81, and a cleaning unit 82.

The control unit 10 is configured to control unit modules to operate in coordination to complete a printing task.

The LSU 20 may generate a plurality of laser beams. In this embodiment, four laser beams are used as an example for description subsequently. After the four laser beams are illuminated on the photosensitive drum 30, four laser light spots arranged along a secondary scanning direction may be formed. The LSU 20 may scan the generated laser beams on a photosensitive surface of the photosensitive drum 30 along a primary scanning direction. Correspondingly, each time the LSU 20 completes one time of scanning along the primary scanning direction, four rows of scanning light spots may be formed on the photosensitive surface of the photosensitive drum 30.

The charging unit 40 may charge the photosensitive drum 30. The developing unit 50 has toner of four colors: C, M, Y, and Bk. The transfer unit 60 includes a transfer belt and a transfer roller. The cleaning unit 81 is configured to remove toner and charges remaining on the photosensitive surface of the photosensitive drum 30. The cleaning unit 82 is configured to remove toner and charges remaining on the transfer belt.

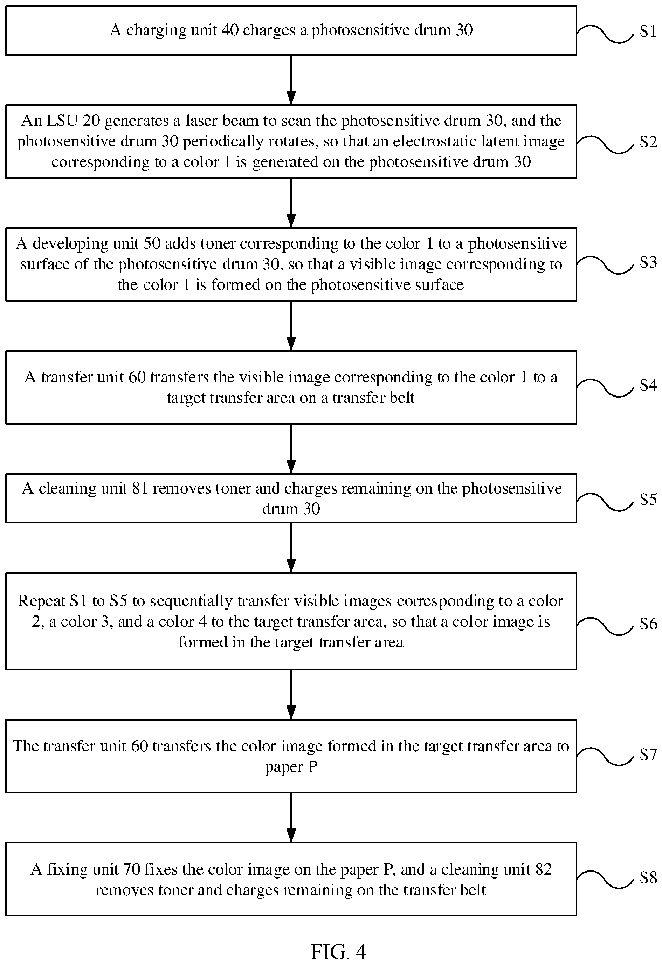

Refer to FIG. 4. Under control by the control unit 10, the unit modules may perform the following process to complete printing of an image.

S1: The charging unit 40 charges the photosensitive drum 30, so that the photosensitive surface of the photosensitive drum 30 generates uniform negative charges.

S2: The LSU 20 generates a laser beam to scan the photosensitive surface of the photosensitive drum 30 along the primary scanning direction, and the photosensitive drum 30 periodically rotates along the secondary scanning direction, so that an electrostatic latent image corresponding to a color 1 is generated on the photosensitive surface of the photosensitive drum 30.

Each time the LSU 20 completes one time of scanning along the primary scanning direction, the photosensitive drum 30 rotates along the secondary scanning direction once, and the photosensitive surface of the photosensitive drum 30 may rotate by a distance of four dots.

S3: The developing unit 50 adds toner corresponding to the color 1 to the photosensitive surface of the photosensitive drum 30, so that a visible image corresponding to the color 1 is formed on the photosensitive surface.

The color 1 may be any one of the four colors C, M, Y, and Bk.

S4: The transfer unit 60 transfers the visible image corresponding to the color 1 to a target transfer area on the transfer belt. The target transfer area may be any area on the transfer belt.

S5: The cleaning unit 81 removes toner and charges remaining on the photosensitive drum 30.

S6: Repeat S1 to S5 to sequentially transfer visible images corresponding to a color 2, a color 3, and a color 4 to the target transfer area, so that a color image is formed in the target transfer area.

S7: The transfer unit 60 transfers the color image formed in the target transfer area to paper P.

S8: The fixing unit 70 fixes the color image on the paper P, and the cleaning unit 82 removes toner and charges remaining on the transfer belt.

It may be understood that, in a process of printing a visible image of any color, as the photosensitive drum 30 rotates, S1 to S5 may be repeated, so that the visible image corresponding to the color may be formed on the photosensitive surface after the foregoing steps S1 to S5 are performed.

In a process of printing an image, a visible image corresponding to a color 1 of the entire image may be first transferred through steps S1 to S5, then visible images corresponding to the other three colors of the entire image are transferred in sequence through step S6, and after a color image is transferred to and fixed on the paper P through steps S7 and S8, the paper P is output. Alternatively, a visible image corresponding to a part of the image may be first transferred to the paper P through steps S1 to S7, then a visible image corresponding to a remaining part of the image is transferred to the paper P, and fixing is performed through step S8. A specific printing manner may be set according to a requirement. This is not specifically limited in this embodiment.

In addition, a formation sequence of the four colors may be any sequence. This is not specifically limited in this embodiment.

The following describes a specific structure of the LSU 20.

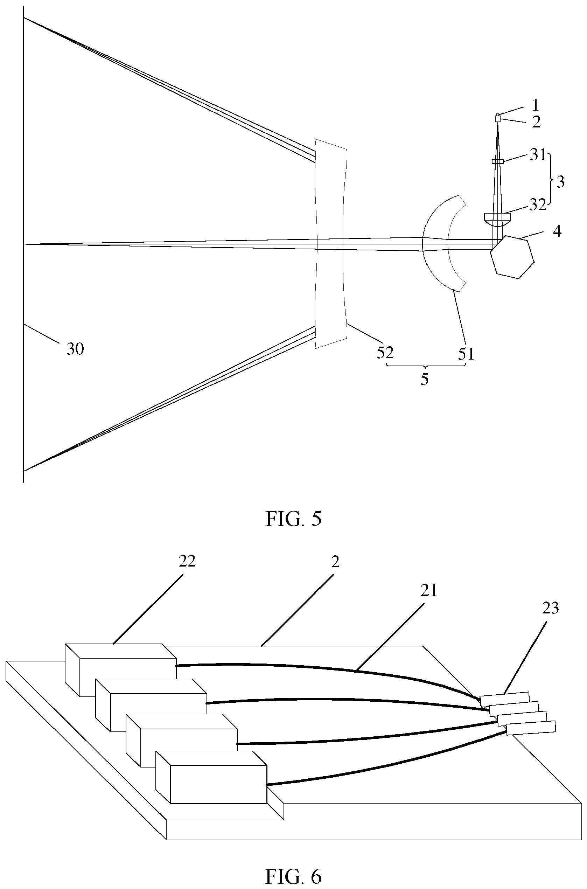

FIG. 5 is a diagram of a structure of an LSU according to an embodiment of this application. The figure is a view of a primary scanning cross-section of the LSU 20. The primary scanning cross-section is a cross-section parallel to the primary scanning direction and an optical axis (namely, a symmetry axis of the LSU 20) of the LSU 20. As shown in FIG. 5, the LSU 20 may include a laser source 1, a beam combiner 2, a collimation system 3, a multi-sided scanning mirror 4, and an imaging optical system. The imaging optical system is generally implemented by using an fθ lens. For ease of understanding, an fθ system 5 is used to represent the imaging optical system.

The laser source 1 is configured to generate a plurality of laser beams. Four laser beams are still used as an example. The laser source 1 may include four laser devices, and the four laser devices may be independent devices, or may be integrated into one or more devices. Wavelengths of the laser beams may be 780 nm or other values.

The beam combiner 2 is configured to reduce a spacing between central rays of the laser beams, so that the laser sources can be accurately arranged at a small spacing. It may be understood that a transverse cross-section of a laser beam has a central point, and a central axis is a reference line that is perpendicular to the cross-section and that penetrates through the central point. A central ray of the laser beam is a ray that is in the laser beam and that overlaps the central axis of the laser beam, and the central ray of the laser beam may also be referred to as a main ray.

Specifically, a light transmission channel inside the beam combiner 2 may be implemented by using a lens combination, or may be implemented by using an optical waveguide, to reduce structure complexity and improve light transmission efficiency.

FIG. 6 is a diagram of a structure of a beam combiner according to an embodiment of this application. As shown in FIG. 6, the beam combiner 2 may include four optical waveguide channels 21. The optical waveguide channels 21 are in one-to-one correspondence with the laser beams. A light input end 22 of the optical waveguide channel 21 may receive a corresponding laser beam, and a light output end 23 may emit the laser beam to the collimation system 3. The beam combiner 2 may have a housing (not shown).

The light input end 22 of the optical waveguide channel 21 may be connected to a light emitting port of the laser source in an aligned manner, and a coupling lens may be disposed at the light input end 22, to increase light coupling efficiency of the optical waveguide channel 21 and improve light transmission efficiency.

A position relationship between light input ends 22 of the optical waveguide channels 21 may be consistent with a position relationship between four light emitting ports of the laser source, and a linear arrangement manner is used.

It may be understood that, in FIG. 6, an example in which the four light input ends 22 are arranged in linearly is used for description, and is not intended to limit this application. In another embodiment, the four light input ends 22 may be arranged in another manner. For example, the four light input ends 22 may be arranged in a form of two rows and two columns.

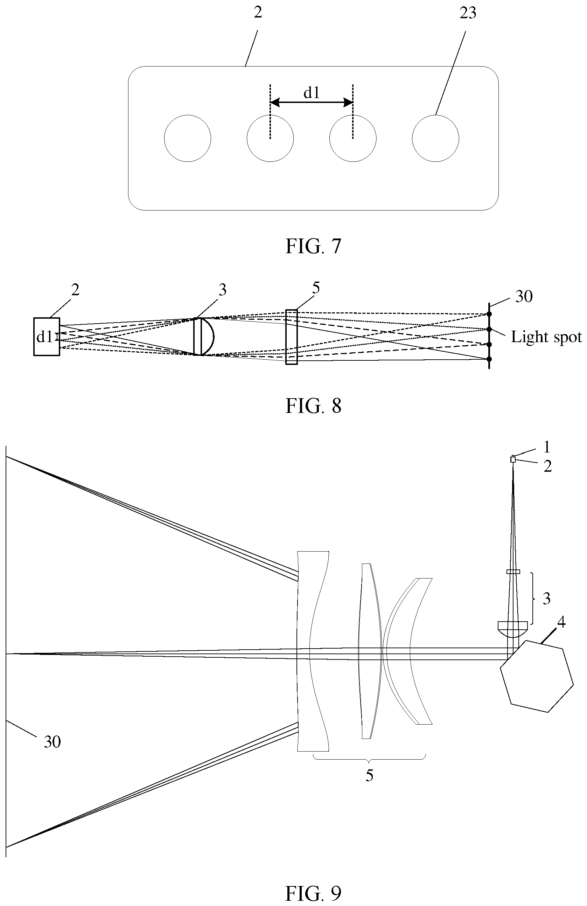

FIG. 7 is a diagram of a position relationship between light output ends of optical waveguide channels in FIG. 6. As shown in FIG. 7, light emitting centers of light output ends 23 (namely, centers of light emitting surfaces of the light output ends 23) may be arranged along a straight line, and spacings between adjacent light emitting centers are equal, so that light spots formed on the photosensitive surface by the laser beams passing through the beam combiner 2 can be arranged at equal spacings along the secondary scanning direction.

The straight line in which the light emitting centers of the light output ends 23 are located may form an included angle with a rotating shaft of the multi-sided scanning mirror 4, or may be parallel to the rotating shaft of the multi-sided scanning mirror 4. In other words, the light emitting centers of the light output ends 23 may be arranged at equal spacings along a direction parallel to the rotating shaft of the multi-sided scanning mirror 4. Correspondingly, when the laser beams arrive at the multi-sided scanning mirror 4, included angles between the laser beams and a reflective surface of the multi-sided scanning mirror 4 are the same. After the laser beams are deflected to the photosensitive surface, light spots formed by the laser beams on the photosensitive surface may be arranged at equal spacings along the secondary scanning direction, that is, the light spots formed by the laser beams on the photosensitive surface are aligned in a column direction. In this way, it is convenient to modulate laser, and complexity of a laser modulation process is reduced. This is used as an example for description subsequently.

The optical waveguide channels 21 may change light transmission directions of the laser beams. Under effect of the optical waveguide channels 21, after the four laser beams pass through the beam combiner 2, the spacing between the central rays may be reduced to a small distance.

A spacing between the central rays after the four laser beams pass through the beam combiner 2, namely, the spacing d1 between the light emitting centers of the four light output ends 23, is related to a focal length of the collimation system 3. A longer focal length of the collimation system 3 indicates a larger system volume of the collimation system 3. Therefore, to reduce the volume of the collimation system 3, the spacing d1 between the light emitting centers of the four light output ends 23 may be set to be minimum. In addition, it is considered that a smaller spacing d1 indicates greater manufacturing difficulty and greater interference between laser beams of adjacent light output ends 23. Therefore, in this embodiment, the volume of the collimation system 3, manufacturing difficulty, and light transmission effect are taken into account comprehensively, and the spacing d1 between the light emitting centers of the four light output ends 23 of the beam combiner 2 may be set between 10 $\mu$m and 50 $\mu$m.

The light output end 23 of the optical waveguide channel 21 may have a capability of shaping a corresponding laser beam into a beam that has a specific divergence angle and a light spot of a specific size. For example, in this embodiment, the divergence angle of the laser beam that is output by the light output end 23 is approximately 10°, and the light spot is approximately a circle.

As shown in FIG. 8, emitting directions of the light emitting centers of the light output ends 23 of the optical waveguide channels 21 may face an optical center of the collimation system 3. In this way, it is convenient for the collimation system 3 to collect the laser beams, and light transmission efficiency is improved. The optical center of the collimation system 3 is a special point, and the point is located on an optical axis (namely, a symmetry axis of the collimation system 3) of the collimation system 3. A propagation direction of light passing through the point remains unchanged, and the focal length f1 of the collimation system 3 is a distance from the optical center of the collimation system 3 to a focal point.

For brevity, FIG. 8 shows only the beam combiner 2, the collimation system 3, the f$\theta$ system 5, and the photosensitive drum 30 in a secondary scanning cross-section, other components are omitted, and the collimation system 3 and the f$\theta$ system 5 each are represented by using one lens. In addition, for ease of understanding, the laser beams are represented by using different line patterns, and FIG. 8 merely shows an example of a position relationship between four light spots, and does not limit specific positions and sizes of the light spots. The secondary scanning cross-section is a cross-section parallel to the secondary scanning direction and the optical axis of the LSU 20.

The collimation system 3 is configured to collimate the laser beams whose spacing is reduced by the beam combiner 2, so that the laser beams passing through the collimation system 3 are basically parallel, and an included angle between the central rays of the laser beams emitted to the f$\theta$ system 5 satisfies a requirement.

The collimation system 3 may include one or more collimation lenses. The collimation lens may be made of glass or plastic. A specific quantity of collimation lenses may be determined based on the focal length f1 of the collimation system 3. When the focal length f1 is small, one collimation lens may be used to reduce system complexity. When the focal length f1 is large, a plurality of collimation lenses may be used to reduce a length (namely, an optical path length) of the collimation system 3 in an optical axis direction. In FIG. 5, an example in which the collimation system 3 includes a first collimation lens 31 having a negative focal power and a second collimation lens 32 having a positive focal power is used for description.

Specifically, the focal length f1 of the collimation system 3 and the optical path length L1 of the collimation system 3 may satisfy 1>L1/f1>0.2, to reduce structure complexity of the collimation system 3 and satisfy a requirement for the volume of the collimation system 3.

The focal length f1 of the collimation system 3 is related to the included angle between the central rays of the laser beams emitted to the fθ system 5 and the spacing d1 between the light emitting centers of the four light output ends 23 of the beam combiner 2, and may specifically satisfy the following formula:

$$f1=d1/\tan(\theta 1) \tag{1}$$

θ1 indicates an included angle between central rays after laser beams that are output by adjacent light output ends 23 of the beam combiner 2 pass through a collimation lens. The spacing between adjacent light output ends 23 of the beam combiner 2 is very small relative to the focal length f1 of the collimation system 3. After the laser beams that are output by the light output ends 23 pass through the collimation lens, although included angles between central rays of adjacent laser beams are different, the difference is very small and has little impact on the focal length f1 of the collimation system 3. Therefore, after the laser beams that are output by the light output ends 23 pass through the collimation lens, the included angles between central rays of adjacent laser beams may be considered to be equal.

The multi-sided scanning mirror 4 is configured to deflect and scan the laser beams collimated by the collimation system 3. Specifically, the rotating shaft of the multi-sided scanning mirror 4 may be perpendicular to the primary scanning direction, and a reflective surface of the multi-sided scanning mirror 4 may deflect an incident laser beam, so that the laser beam is emitted to the fθ system 5.

The multi-sided scanning mirror 4 may rotate at a constant speed under driving of a driving apparatus such as a motor (not shown), so that the laser beam can scan back and forth within a specific angle range. A scanning angle θ2 of the multi-sided scanning mirror 4 is a center angle corresponding to one reflective surface of the multi-sided scanning mirror 4. For example, as shown in FIG. 5, the multi-sided scanning mirror 4 is a prismatic six-sided mirror, and correspondingly, the scanning angle θ2 is 60°.

The fθ system 5 is configured to focus the laser beams deflected by the multi-sided scanning mirror 4 on the photosensitive surface of the photosensitive drum 30, to form four laser light spots. As shown in FIG. 8, the four laser beams at the light emitting centers of the corresponding light output ends 23 of the beam combiner 2 are arranged at equal spacings (the spacing is d1) along a direction parallel to the rotating shaft of the multi-sided scanning mirror 4. Correspondingly, the four laser light spots formed by the four laser beams that pass through the fθ system 5 are arranged at equal spacings along the secondary scanning direction. Under scanning effect of the multi-sided scanning mirror 4, the four laser beams may form, on the photosensitive drum 30, four rows of scanning light spots arranged at equal spacings along the secondary scanning direction.

The fθ system 5 may include one or more fθ lenses. The fθ lens may be made of a plastic material. A specific quantity of fθ lenses may be determined based on a size of a laser light spot that needs to be formed. When there is no need to form a very small laser light spot, one fθ lens may be used, to reduce system complexity and manufacturing costs. When there is a need to form a small laser light spot, a plurality of fθ lenses may be used, to ensure focusing precision. In FIG. 5, an example in which the fθ system 5 includes two fθ lenses (a first fθ lens 51 and a second fθ lens 52) is used for description.

The size of the laser light spot that needs to be formed is related to a scanning resolution dpi. A larger scanning resolution dpi indicates more laser light spots that need to be formed in a unit distance, and correspondingly, a smaller laser light spot is needed. To ensure printing quality, distortion of the fθ system 5 may be controlled to be less than 0.5%.

A focal length f2 of the fθ system 5 is related to the scanning angle θ2 and a scanning width d2 of the photosensitive surface in the primary scanning direction, and may satisfy the following formula:

$$f2=d2/(\theta 2*\pi/180°) \tag{2}$$

The scanning width d2 of the fθ system 5 is a maximum width, in the primary scanning direction, of scanning light spots formed by the fθ system 5 on the photosensitive drum 30. The scanning width d2 may be consistent with a paper width.

In addition, the focal length f2 of the fθ system 5 is further related to the scanning resolution dpi. A larger scanning resolution dpi indicates more laser light spots that need to be formed in a unit distance. Correspondingly, a smaller spacing d between centroids of laser light spots is needed, and a longer focal length f2 of the fθ system 5 is needed.

The resolution dpi indicates a quantity of dots per inch (25.4 mm). Correspondingly, d=25.4 mm/dpi, and the focal length f2 of the fθ system 5 may satisfy the following formula:

$$d=f2*(\theta 1*\pi/180°) \tag{3}$$

In addition, the focal length f2 of the fθ system 5 and an optical path length L2 of the fθ system 5 may satisfy 1.5>f2/L2>0.5.

It is assumed that the spacing d1 between the light emitting centers of the four light output ends 23 of the beam combiner 2 is 30 μm, the paper is A4 paper, the scanning angle θ2 is 60°, and scanning resolutions in a row direction (corresponding to the primary scanning direction) and a column direction (corresponding to the secondary scanning direction) are 600 dpi. Then, the scanning width d2 is 210 mm, and the spacing d between the centroids of the laser light spots is 42 μm. According to Formula (2), the focal length f2 of the fθ system 5 is 201 mm, and according to Formula (3) and Formula (1), the focal length f1 of the collimation system 3 is 143 mm. With the use of the structure shown in FIG. 5, the optical path length of the collimation system 3 may be reduced to 59 mm, the optical path length of the fθ system 5 may be controlled to be 226 mm, and a total system length of the LSU 20 may be controlled to be 285 mm.

When the focal length f1 and the focal length f2 are determined, an integer may be determined by using a method such as rounding up, rounding, or decimal ignoring, or several decimal places may be reserved by using a similar method. In this embodiment, the rounding method is used as an example for description.

The following describes a specific operating principle of the LSU 20 with reference to FIG. 5.

The laser source 1 converts, based on a laser modulation signal of the control unit 10, four image points arranged along a column direction (corresponding to the secondary scanning direction) in to-be-printed four rows of images into four laser pulse signals (namely, laser beams). After the four laser beams pass through the beam combiner 2, at the light emitting centers, the four laser beams are arranged at equal spacings along a direction parallel to the rotating shaft of the multi-sided scanning mirror 4. Then, the collimation system 3 converts the four diverging laser beams into basically parallel beams. After passing through the multi-sided scanning mirror 4, the four laser beams are deflected to the fθ system 5. The fθ system 5 focuses the four laser beams, to form four light spots on the photosensitive drum 30. The laser source 1 continues to generate laser beams corresponding to image points in next several columns of the four rows of images. As the multi-sided scanning mirror 4 rotates at a uniform speed, the laser beams corresponding to the four rows of images generated by the laser source 1 may be scanned on the photosensitive drum 30 along the primary scanning direction, to scan four rows simultaneously and form four rows of scanning light spots on the photosensitive drum 30. After the four-row scanning is completed, the photosensitive drum 30 is controlled to rotate by a specific angle. When the multi-sided scanning mirror 4 rotates to a next reflective surface, the laser source 1 continues to generate laser beams corresponding to next four rows of images, to scan the next four rows of images.

As described above, a quantity of lenses included in the collimation system 3 and the fθ system 5 in the LSU 20 may be set according to a related requirement. The following describes examples of a structure of the LSU 20 corresponding to two other application scenarios with different requirements.

Application scenario 1: scanning resolution of 2000 dpi

According to the foregoing requirement, it may be determined that the spacing d between the centroids of the laser light spots on the photosensitive surface is 12.7 μm. With reference to Formula (1) to Formula (3), it can be learned that compared with the application scenario of 600 dpi in FIG. 5, in this scenario, a system requires a longer focal length f1 of the collimation system 3. To reduce manufacturing difficulty, the spacing d1 between the light emitting centers of the four light output ends 23 of the beam combiner 2 may be still 30 μm.

Consistent with the scenario in FIG. 5, the scanning width d2 is 210 mm, and the scanning angle θ2 is 60°. In this case, it may be determined that the focal length f2 of the fθ system 5 is 201 mm, and the focal length f1 of the collimation system 3 is 472 mm.

Compared with the scenario in FIG. 5, this scenario requires a smaller spacing d and a longer focal length f1 of the collimation system 3. The structure of the LSU 20 corresponding to the scenario may be shown in FIG. 9. The collimation system 3 may include two collimation lenses, to reduce a total system length and reduce assembly difficulty. The fθ system 5 may include three fθ lenses, to ensure printing precision. Other structures (the laser source, the beam combiner 2, and the multi-sided scanning mirror 4) are similar to those in FIG. 5.

Based on the structure in FIG. 9, a structure parameter corresponding to the scenario may be designed as a result shown in Table 1. Table 1 also shows comparison between the structure parameter in this scenario and a structure parameter in the scenario shown in FIG. 5.

**Table 1**

|  | FIG. 5 | FIG. 9 |
|---|---|---|
| Scanning resolution | 600 dpi | 2000 dpi |
| Spacing d1 in a beam combiner 2 | 30 μm | 30 μm |
| Optical path length of a collimation system 3 | 59 mm | 100 mm |
| Optical path length of an fθ system 5 | 226 mm | 250 mm |

(continued)

|  | FIG. 5 | FIG. 9 |
|---|---|---|
| Total system length | 285 mm | 350 mm |

Compared with the scenario in FIG. 5, in the scenario corresponding to FIG. 9, the scanning resolution is significantly increased. Correspondingly, the system requires a longer focal length of the collimation system 3, and the total system length is increased accordingly.

Application scenario 2: scanning resolution of 200 dpi

According to the foregoing requirement, it may be determined that the spacing d between the centroids of the laser light spots on the photosensitive surface is 127 $\mu$m. With reference to Formula (1) to Formula (3), it can be learned that compared with the application scenario of 600 dpi in FIG. 5, a requirement for the scanning resolution in this scenario is lower, and a system requires a shorter focal length f1 of the collimation system 3. To reduce manufacturing difficulty, a slightly larger value, for example, 50 $\mu$m, may be selected for the spacing d1 between the light emitting centers of the four light output ends 23 of the beam combiner 2.

Consistent with the scenario in FIG. 5, the scanning width d2 is 210 mm, and the scanning angle $\theta$2 is 60°. In this case, it may be determined that the focal length f2 of the f$\theta$ system 5 is 201 mm, and the focal length f1 of the collimation system 3 is 79 mm.

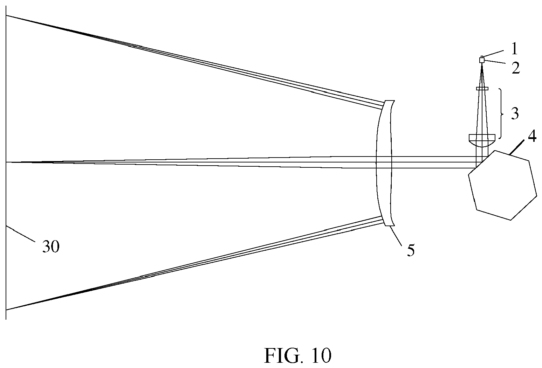

Compared with the scenario in FIG. 5, in this scenario, the spacing d is larger, and the focal length f1 of the collimation system 3 is shorter. The structure of the LSU 20 corresponding to the scenario may be shown in FIG. 10. The collimation system 3 may include two collimation lenses, to reduce a total system length. The f$\theta$ system 5 may include one f$\theta$ lens, to reduce assembly difficulty and manufacturing costs. Other structures (the laser source, the beam combiner 2, and the multi-sided scanning mirror 4) are similar to those in FIG. 5.

Based on the structure in FIG. 10, a structure parameter corresponding to the scenario may be designed as a result shown in Table 2. Table 1 also shows comparison between the structure parameter in this scenario and a structure parameter in the scenario shown in FIG. 5.

**Table 2**

|  | FIG. 5 | FIG. 10 |
|---|---|---|
| Scanning resolution | 600 dpi | 200 dpi |
| Spacing d1 in a beam combiner 2 | 30 $\mu$m | 50 $\mu$m |
| Optical path length of a collimation system 3 | 59 mm | 51 mm |
| Optical path length of an f$\theta$ system 5 | 226 mm | 250 mm |
| Total system length | 285 mm | 301 mm |

Compared with the scenario in FIG. 5, in the scenario corresponding to FIG. 10, a requirement for the scanning resolution is lower. Correspondingly, the system requires a shorter focal length f1 of the collimation system 3, and the total system length is shorter accordingly.

It may be understood that structures shown in embodiments of this application do not constitute a specific limitation on the LSU 20. In some other embodiments of this application, the LSU 20 may include more or fewer components than those shown in the figure, or combine some components, or split some components, or have different component arrangements. For example, in the LSU 20, a reflecting mirror may be disposed between the f$\theta$ system 5 and the photosensitive drum 30, to change an optical path.

In the technical solutions provided in embodiments of this application, an LSU may generate a plurality of laser beams, to implement simultaneous multi-row scanning on a photosensitive surface. Therefore, a scanning speed can be effectively improved, and when the LSU is used in a laser printer, a printing speed of the laser printer can be improved. In addition, for a color laser printer using toner of a plurality of (for example, four) colors, when one LSU that uses four or more laser beams is used to sequentially print various colors, a printing speed can be the same as or even higher than a printing speed of a color laser printer that uses four conventional LSUs (which generate one laser beam). In this way, there is no need to use four LSUs. Therefore, in the technical solutions provided in embodiments of this application, a printing speed of a color laser printer is improved, and structure complexity and manufacturing costs of the color laser printer can be reduced. In addition, in the solutions, the LSU uses a beam combiner, so that a plurality of laser sources can be accurately arranged at a small spacing, to ensure that the plurality of laser beams are accurately focused on the photosensitive surface, and implement high-precision scanning.

In the foregoing embodiments, the description of each embodiment has respective focuses. For a part that is not described in detail or recorded in an embodiment, refer to related descriptions in other embodiments.

In addition, in descriptions of this application, it should be understood that an orientation or a position relationship indicated by the terms "longitudinal", "transverse", "up", "down", "front", "back", "left", "right", "vertical", "horizontal", "perpendicular", "top", "bottom", "inside", "outside", "axial", "radial", "circular", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In addition, in this application, unless otherwise specified and limited, the terms "connect", "link", and the like should be understood in a broad sense. For example, "connect" may indicate a mechanical connection or an electrical connection; or may indicate a direct connection or an indirect connection through an intermediate medium; or may indicate a connection inside two elements or an interaction relationship between two elements. Unless otherwise specified, a person of ordinary skill in the art may understand specific meanings of the foregoing terms in this application according to specific situations.

It should be understood that, in the specification and the claims of this application, the terms "include", "have", and any other variants mean to cover a non-exclusive inclusion, for example, a process, method, system, product, or device that includes a series of steps or modules is not necessarily limited to those steps or modules that are clearly listed, but may include other steps or modules not expressly listed or inherent to such a process, method, product, or device.

In the descriptions of this application, "/" indicates an "or" relationship between associated objects unless otherwise specified. For example, A/B may indicate A or B. In this application, "and/or" describes only an association relationship of associated objects and indicates that three relationships may exist. For example, A and/or B may indicate the following three cases: Only A exists, both A and B exist, and only B exists, where A and B may be singular or plural.

In addition, in the descriptions of this application, "a plurality of" means two or more than two unless otherwise specified. "At least one of the following items" or a similar expression thereof means any combination of these items, including a singular item or any combination of plural items. For example, "at least one of a, b, or c" may indicate: a, b, c, a and b, a and c, b and c, or a, b, and c, where a, b, and c may be singular or plural.

In addition, in the specification and the claims of this application, the terms "first", "second", "third", and the like are intended to distinguish between similar objects but do not necessarily indicate a specific order or sequence. It should be understood that terms used in such a way are interchangeable in appropriate circumstances, so that embodiments described herein can be implemented in other orders than the order illustrated or described herein.

Reference to "an embodiment", "some embodiments", or the like described in the specification of this application indicates that one or more embodiments of this application include a specific feature, structure, or characteristic described with reference to the embodiment. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized.

Finally, it should be noted that the foregoing embodiments are merely intended for describing the technical solutions of this application other than limiting this application. Although this application is described in detail with reference to the foregoing embodiments, a person of ordinary skill in the art should understand that modifications can still be made to the technical solutions described in the foregoing embodiments or equivalent replacements can still be made to some or all technical features thereof, without departing from the scope of the technical solutions of embodiments of this application.

**Claims**

1. A laser scanning unit, comprising:

   a laser source, configured to generate a plurality of laser beams;
   a beam combiner, having light input ends and light output ends that are in one-to-one correspondence with the laser beams, wherein the light input end is configured to receive a corresponding laser beam, the beam combiner is configured to output, after reducing a spacing between central rays of the laser beams received by the light input ends, each laser beam from a corresponding light output end, light emitting centers of the light output ends are arranged along a straight line, and spacings between light emitting centers of adjacent light output ends are equal; and
   a scanning component, configured to scan, on a photosensitive surface along a primary scanning direction, each laser beam that is output by the beam combiner, to form a plurality of rows of scanning light spots.

2. The laser scanning unit according to claim 1, wherein the light input end and the light output end that are corresponding to each laser beam are connected by using an optical waveguide channel.

3. The laser scanning unit according to claim 1 or 2, wherein the scanning component comprises: a collimation system, a multi-sided scanning mirror, and an imaging optical system, wherein the collimation system is configured to collimate the laser beams whose spacing is reduced by the beam combiner, the multi-sided scanning mirror is configured to deflect and scan the laser beams that are collimated by the collimation system, and the imaging optical system is configured to focus, on the photosensitive surface, the laser beams that are deflected and scanned by the multi-sided scanning mirror, to form the plurality of rows of scanning light spots that are arranged along the primary scanning direction.

4. The laser scanning unit according to claim 3, wherein the laser scanning unit satisfies: $f1=d1/\tan(\theta1)$, wherein f1 indicates a focal length of the collimation system, d1 indicates the spacing between light emitting centers of adjacent light output ends, and $\theta1$ indicates an included angle between central rays after laser beams that are output by adjacent light output ends pass through a collimation lens.

5. The laser scanning unit according to claim 4, wherein the laser scanning unit satisfies: $25.4/dpi=f2*(\theta1*\pi/180°)$, wherein dpi indicates a scanning resolution of the photosensitive surface in a secondary scanning direction, f2 indicates a focal length of the imaging optical system, and the secondary scanning direction is perpendicular to the primary scanning direction.

6. The laser scanning unit according to any one of claims 3 to 5, wherein the laser scanning unit satisfies: $f2=d2/(\theta2*\pi/180°)$, wherein f2 indicates the focal length of the imaging optical system, d2 indicates a scanning width of the photosensitive surface in the primary scanning direction, and $\theta2$ indicates a scanning angle of the multi-sided scanning mirror.

7. The laser scanning unit according to any one of claims 3 to 6, wherein the multi-sided scanning mirror comprises a rotating shaft, the multi-sided scanning mirror rotates around the rotating shaft that is used as an axis, and the light emitting centers of the light output ends are arranged at equal spacings along a direction parallel to the rotating shaft of the multi-sided scanning mirror.

8. The laser scanning unit according to claim 7, wherein the spacing d1 between light emitting centers of adjacent light output ends satisfies: $50 \ \mu m > d1 > 10 \ \mu m$.

9. The laser scanning unit according to any one of claims 3 to 8, wherein the laser scanning unit satisfies: $1 > L1/f1 > 0.2$, wherein f1 indicates the focal length of the collimation system, and L1 indicates an optical path length of the collimation system.

10. The laser scanning unit according to any one of claims 3 to 9, wherein the laser scanning unit satisfies: $1.5 > f2/L2 > 0.5$, wherein f2 indicates the focal length of the imaging optical system, and L2 indicates an optical path length of the imaging optical system.

11. The laser scanning unit according to any one of claims 3 to 10, wherein emitting directions of the light emitting centers of the light output ends face an optical center of the collimation system.

12. The laser scanning unit according to any one of claims 1 to 11, wherein a coupling lens is disposed at the light input end of the beam combiner.

13. A laser printer, comprising a control unit, a photosensitive drum, and the laser scanning unit according to any one of claims 1 to 10, wherein the control unit is configured to:

control the laser scanning unit to scan a plurality of generated laser beams on a photosensitive surface of the photosensitive drum along a primary scanning direction, to form a plurality of rows of scanning light spots, wherein the primary scanning direction is parallel to an axial direction of a rotating shaft of the photosensitive drum; and
each time the laser scanning unit completes one time of scanning along the primary scanning direction, control the photosensitive drum to rotate around the rotating shaft, so that a scanning light spot on the photosensitive surface moves a distance of a plurality of dots.

Control unit — 101

LSU — 102

103

104

105

108

107

P

106

FIG. 1

FIG. 2

Control unit — 10

LSU — 20

30

50

40

C

M

Y

Bk

81

82

60

70

P

FIG. 3

A charging unit 40 charges a photosensitive drum 30 — S1

An LSU 20 generates a laser beam to scan the photosensitive drum 30, and the photosensitive drum 30 periodically rotates, so that an electrostatic latent image corresponding to a color 1 is generated on the photosensitive drum 30 — S2

A developing unit 50 adds toner corresponding to the color 1 to a photosensitive surface of the photosensitive drum 30, so that a visible image corresponding to the color 1 is formed on the photosensitive surface — S3

A transfer unit 60 transfers the visible image corresponding to the color 1 to a target transfer area on a transfer belt — S4

A cleaning unit 81 removes toner and charges remaining on the photosensitive drum 30 — S5

Repeat S1 to S5 to sequentially transfer visible images corresponding to a color 2, a color 3, and a color 4 to the target transfer area, so that a color image is formed in the target transfer area — S6

The transfer unit 60 transfers the color image formed in the target transfer area to paper P — S7

A fixing unit 70 fixes the color image on the paper P, and a cleaning unit 82 removes toner and charges remaining on the transfer belt — S8

FIG. 4

FIG. 5

FIG. 6

FIG. 7

FIG. 8

FIG. 9

FIG. 10

## INTERNATIONAL SEARCH REPORT

International application No.

**PCT/CN2023/071342**

### A. CLASSIFICATION OF SUBJECT MATTER

G03G15/04(2006.01)i; G02B26/10(2006.01)i

According to International Patent Classification (IPC) or to both national classification and IPC

### B. FIELDS SEARCHED

Minimum documentation searched (classification system followed by classification symbols)

IPC: G02B, G03G

Documentation searched other than minimum documentation to the extent that such documents are included in the fields searched

Electronic data base consulted during the international search (name of data base and, where practicable, search terms used)

CNABS, VEN, CNTXT, CJFD, ENTXT, ENTXTC: 打印, 扫描, 多行, 多束, 多路, 多光束, 多光路, 光斑, 波导, 合束, print+, scan+, multiple, spot, wave+, guid+, light+, synthesiz+, bound+

### C. DOCUMENTS CONSIDERED TO BE RELEVANT

| Category* | Citation of document, with indication, where appropriate, of the relevant passages | Relevant to claim No. |
|---|---|---|
| X | CN 1431538 A (CANON INC.) 23 July 2003 (2003-07-23) <br> description, page 4, line 5-page 13, line 13, and figures 1-11 | 1-13 |
| X | JP H1184283 A (RICOH K. K.) 26 March 1999 (1999-03-26) <br> description, paragraphs 25-67, and figures 1-18 | 1-13 |
| X | CN 1430084 A (CANON INC.) 16 July 2003 (2003-07-16) <br> description, page 7, line 15-page 13, line 12, and figures 1-6 | 1-13 |
| X | JP H0832775 A (HITACHI KOKI K. K.) 02 February 1996 (1996-02-02) <br> description, paragraphs 12-19, and figures 1-4 | 1-13 |
| X | JP H09236763 A (RICOH K. K.) 09 September 1997 (1997-09-09) <br> description, paragraphs 25-60, and figures 1-4 | 1-13 |
| A | CN 113009797 A (ZHUHAI PANTUM ELECTRONICS CO., LTD.) 22 June 2021 <br> (2021-06-22) <br> entire document | 1-13 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2023** | **07 June 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/071342**

| Patent document cited in search report | | | Publication date (day/month/year) | Patent family member(s) | | | Publication date (day/month/year) |
|---|---|---|---|---|---|---|---|
| CN | 1431538 | A | 23 July 2003 | JP | 2003202511 | A | 18 July 2003 |
| | | | | JP | 3703433 | B2 | 05 October 2005 |
| | | | | US | 2003202231 | A1 | 30 October 2003 |
| | | | | US | 6947190 | B2 | 20 September 2005 |
| | | | | DE | 60317953 | D1 | 24 January 2008 |
| | | | | DE | 60317953 | T2 | 18 December 2008 |
| | | | | US | 2005201251 | A1 | 15 September 2005 |
| | | | | US | 7855817 | B2 | 21 December 2010 |
| | | | | US | 2011116837 | A1 | 19 May 2011 |
| | | | | US | 8125700 | B2 | 28 February 2012 |
| | | | | US | 2011122472 | A1 | 26 May 2011 |
| | | | | US | 8120830 | B2 | 21 February 2012 |
| | | | | EP | 1325814 | A1 | 09 July 2003 |
| | | | | EP | 1325814 | B1 | 12 December 2007 |
| JP | H1184283 | A | 26 March 1999 | US | 6133566 | A | 17 October 2000 |
| CN | 1430084 | A | 16 July 2003 | EP | 1742095 | A1 | 10 January 2007 |
| | | | | EP | 1742095 | B1 | 22 December 2010 |
| | | | | KR | 20030027768 | A | 07 April 2003 |
| | | | | KR | 100446220 | B1 | 30 August 2004 |
| | | | | EP | 1300702 | A2 | 09 April 2003 |
| | | | | EP | 1300702 | A3 | 17 November 2004 |
| | | | | EP | 1300702 | B1 | 22 December 2010 |
| | | | | JP | 2003107381 | A | 09 April 2003 |
| | | | | JP | 3902933 | B2 | 11 April 2007 |
| | | | | DE | 60238658 | D1 | 03 February 2011 |
| | | | | US | 2003085346 | A1 | 08 May 2003 |
| | | | | US | 6930812 | B2 | 16 August 2005 |
| | | | | DE | 60238725 | D1 | 03 February 2011 |
| JP | H0832775 | A | 02 February 1996 | US | 5818496 | A | 06 October 1998 |
| JP | H09236763 | A | 09 September 1997 | JP | 3520151 | B2 | 19 April 2004 |
| CN | 113009797 | A | 22 June 2021 | None | | | |

Form PCT/ISA/210 (patent family annex) (July 2022)

**EP 4 455 794 A1**

## REFERENCES CITED IN THE DESCRIPTION

### Patent documents cited in the description

- CN 202210095730